# EUROPEAN PATENT SPECIFICATION

(11) **EP 1 337 316 B1**
(45) Date of publication and mention of the grant of the patent: **24.05.2006**
(21) Application number: 01983691.5
(22) Date of filing: 19.11.2001
(51) Int. Cl.: B01D 53/94, B01J 23/46

(54) **NOx-TRAP COMPOSITION**
NOX-SPEICHERZUSAMMENSETZUNG
COMPOSITION DE TYPE PIEGE A NOX

(30) Priority: 20.11.2000 GB 0028198
(43) Date of publication of application: 27.08.2003
(73) Proprietor: JOHNSON MATTHEY PUBLIC LIMITED COMPANY, London SW1Y 5BQ (GB)
(72) Inventor: RAJARAM, Raj, Rao, Slough SL3 7PH (GB); POULSTON, Stephen, Reading RG1 5QA (GB)
(74) Representative: Nunn, Andrew Dominic
(86) International application number: PCT/GB2001/005060
(87) International publication number: WO 2002/040139

(56) References cited:
- EP-A- 0 838 255
- EP-A- 0 852 966
- EP-A- 0 857 510
- EP-A- 0 982 066
- EP-A- 0 993 860
- US-A- 5 814 576

## Description

The present invention relates to a NOx-trap composition and in particular to a NOx-trap composition for storing NOx at relatively high temperatures.

Manufacturers are increasingly interested in engines which operate under lean-running conditions to power their vehicles. One reason for this is because lean-burn engines produce less CO₂. This is advantageous because future emission legislation aims to reduce CO₂, but the consumer also benefits from the increased fuel economy. Using engine management techniques and/or employing one or more catalytic converter in a vehicle's exhaust system can control the gaseous composition of the exhaust so that the vehicle meets the relevant emission legislation.

One form of lean-burn engine is a gasoline direct injection engine, which is designed to operate mostly under stoichiometric and lean conditions. When running lean, relatively low levels of NOx are formed that cannot be reduced (removed) in the presence of the relatively high levels of oxygen in the exhaust gas. Using conventional 3-way catalyst technology, reducing species, e.g. unburnt hydrocarbons (HC) and CO, can reduce NOx to N₂ during stoichiometric- or rich-running conditions, as comparatively less oxygen, and more reducing species, is present than during lean-running conditions. In order to control NOx in lean-burn engines, there has been devised a NOx-absorber/catalyst which can store NOx, e.g. as nitrate, when an engine is running lean. In a stoichiometric or rich environment, the nitrate is understood to be thermodynamically unstable, and the stored NOx is released and is catalytically reduced by the reducing species present in the exhaust gas. This NOx-absorber/catalyst is commonly called a NOx-trap. By periodically controlling a lean-burn engine to run stoichiometrically or rich, stored NOx is released/reduced and the NOx-trap regenerated.

A typical NOx-trap composition comprises a catalytic oxidation component, platinum, a NOx-storage component, barium, and a NOx-reduction catalyst, rhodium. See for example www.dieselnet.com/tech/cat nox.trap.html, Revision 2000.07_ EP0993860 discloses a method of making a NOₓ-trap composition comprising a platinum-containing active aluminium oxide, a rhodium-containing cerium/zirconium mixed oxide and particles of barium and/or strontium sulfatc distributed over both the aluminium oxide and cerium/zirconium mixed oxide. The barium and/or strontium active storage compounds are obtained at elevated exhaust gas temperatures of more than 550°C and with stoichiometrically or rich-mix exhaust gas with the release of sulfur oxides. The composition may also contain at least one active nitrogen oxide storage compound from the group of alkali and alkaline earth metals, potassium, rubidium, caesium, magnesium, calcium, strontium and barium in addition to the finely divided sulfates.

One mechanism commonly given for NOx-storage during lean engine operation for this composition is: (i) NO + 1/2O₂ → NO₂; and (ii) BaO + 2NO₂ + 1/2O₂ → Ba(NO₃)₂. In the first step, the nitric oxide reacts with oxygen on active oxidation sites on the platinum to form NO₂. The second step involves absorption of the NO₂ by the storage material in the form of an inorganic nitrate.

When the engine runs under rich conditions or at elevated temperatures, the nitrate species become thermodynamically unstable, producing NO or NO₂ according to equation (iii) below. Under rich conditions, these nitrogen oxides are subsequently reduced by carbon monoxide, hydrogen and HC to N₂, which can take place over the reduction catalyst. (iii) Ba(NO₃)₂ → BaO + 2NO + 3/2O₂ or Ba(NO₃)₂ → BaO + 2NO₂ + 1/2O₂; and (iv) NO + CO → 1/2N₂ + CO₂ (and other reactions). (In the reactions of (i)-(iv) above the reactive barium species is given as the oxide. However, it is understood that in the presence of exhaust gases most of the barium is in the form of the carbonate, the nitrate or possibly the hydroxide. The above reaction schemes can be adapted accordingly for species of barium other than the oxide.)

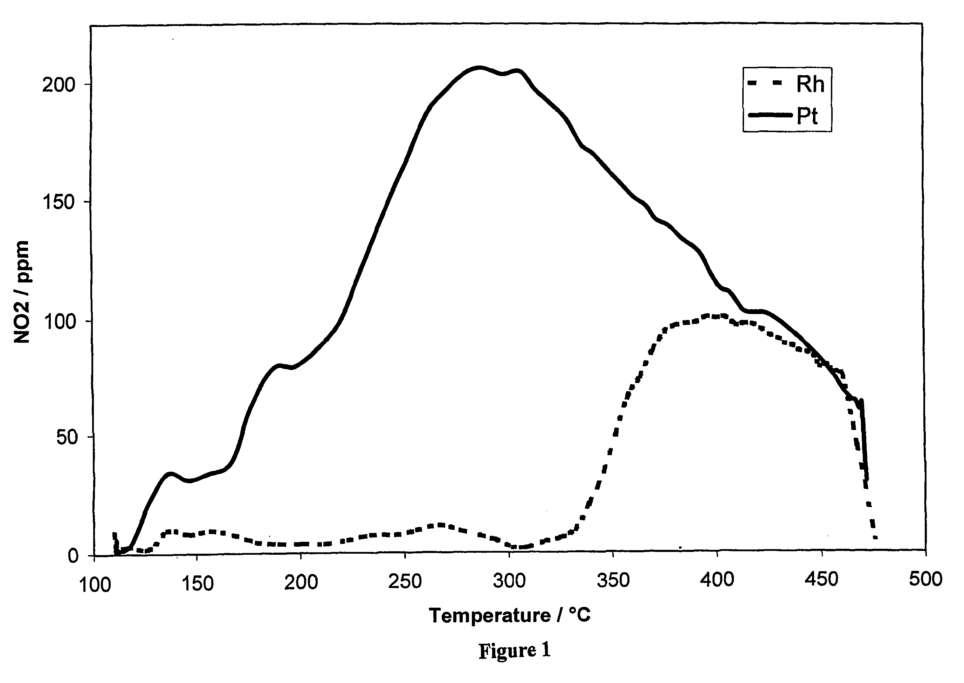

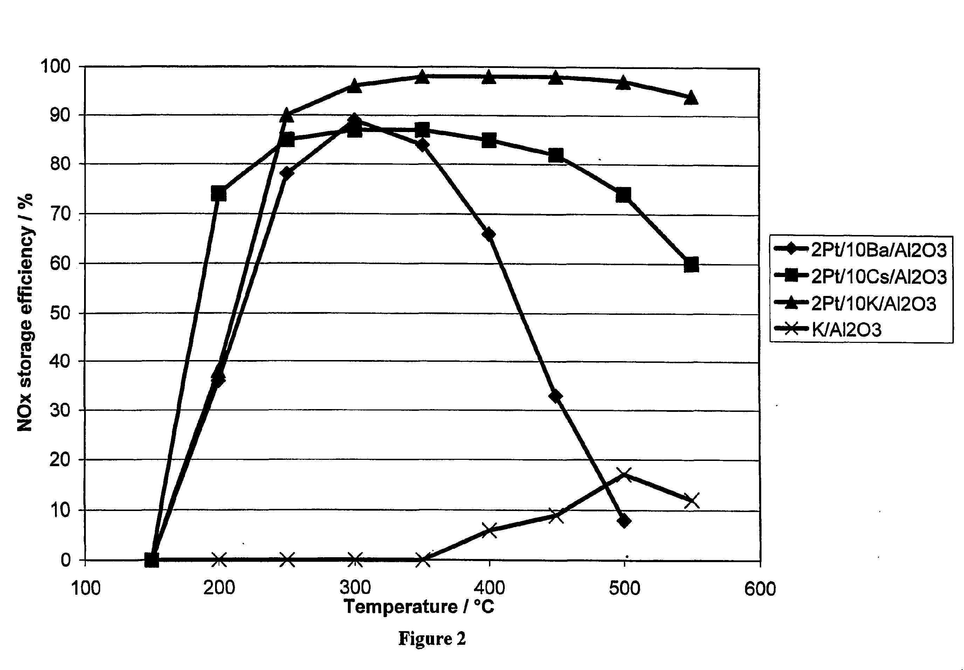

The typical platinum/barium/rhodium NOx-trap composition has a window of temperature activity. At the lower end of this temperature window, activity is limited by the ability of platinum to catalyse the oxidation of NO → NO₂. Catalysis of this reaction is poor below about 150°C (see Fig. 1). At the upper end of the temperature window, activity is limited by the thermal stability of barium nitrate in the lean-burn exhaust gas environment. The more CO₂ is present in an exhaust gas, the more conditions favour barium carbonate formation over barium nitrate at a given temperature. Of course, in lean-burn conditions excess oxygen is present so that combustion of the hydrocarbon is substantially complete. The more lean the mixture, the higher the expected CO₂ concentration of an exhaust gas. Generally, in lean-burn conditions barium nitrate begins to form the carbonate above about 350°C and this occurs more rapidly above about 400°C (see Fig. 2). However, in laboratory conditions barium nitrate exposed to a synthetic lean-burn exhaust gas except with the CO₂ removed would be expected to remain thermally stable up to 450°C or above. Barium nitrate is more thermally unstable at lower temperatures in stoichiometric- or rich-running conditions to enable the NOx-trap composition to be regenerated, but this is because of the presence of reductant.

However, in many situations, particularly with GDI engines or at high load and/or speed, lean-burn exhaust gas temperatures can exceed 350°C. We have investigated elements the nitrate form of which are generally more thermally stable than barium nitrate with a view to developing NOx-trap compositions that are active at temperatures above which barium carbonate formation is favoured in lean-burn exhaust gases. We have now found that, very surprisingly, the typical reduction catalyst rhodium can be used as an oxidation catalyst component in a relatively high temperature NOx-trap composition.

According to one aspect, the invention provides a NOₓ-trap composition consisting essentially of rhodium and at least one alkali metal NOₓ storage component supported on a first support and, optionally, a second support supporting at least one alkali metal or alkaline earth metal NOₓ storage component.

It is believed, although we do not wish to be bound by such belief, that although rhodium is a relatively poor NO oxidation catalyst compared with platinum, the rhodium oxidation mechanism is being driven by NO₂ removal as it is converted to the nitrate.

An advantage of the present invention is that it is possible to make a NOx-trap composition that is free of platinum and/or palladium. This is because we have discovered that it is possible for rhodium to provide both the oxidative and reductive catalytic functions required in a NOx-trap composition. Accordingly, it is not necessary to include further platinum group metals in the composition for oxidising NO.

Furthermore, it is expected that the NOx-trap composition of the present invention has a higher tolerance to sulphur than those comprising platinum-based components. Presently, fuels and engine lubricants comprise a relatively high level of sulphur e.g. up to 350 ppm. Whilst a platinum oxidation catalyst would be expected to oxidise NO to NO₂, it is also proficient at oxidising available SO₂ derived from the fuel and/or lubricant to SO₃ at or above 300°C. The SO₃ forms sulphates of the NOx-storage material. These sulphates are more stable than the corresponding nitrate and their presence leads to reduction of the NOx-storage capacity that must be reversed by a high temperature rich treatment which reduces fuel economy. Rhodium however requires much higher temperatures (~500°C) for lean SO₂ oxidation. By replacing platinum with rhodium as the oxidation catalyst in a NOx-trap composition, it would be expected that sulphation of the catalyst would be reduced.

Whilst the invention has application in general to lean-burn internal combustion engines, particularly gasoline engines such as gasoline direct injection engines, it can also be used in connection with other lean-burn engines such as diesel engines.

Each at least one alkali metal can be selected from the group consisting of potassium, caesium and mixtures thereof. Where present, the alkaline-earth metal on the second support is selected from the group consisting of barium, calcium, strontium, magnesium and mixtures of any two or more thereof.

The at least one NOx-storage component of the present invention is usually present in the form of one or more of its oxides, but it is known that in the presence of typical engine exhaust gases these materials can also be present in the form of carbonates, nitrates and hydroxides.

Each support can comprise an oxide selected from ceria, zirconia, alumina or titania or a mixed oxide of any two or more thereof, or a mixture of any two or more of ceria, zircvnia, alumina or titania. In one illustrative embodiment, the first support is gamma alumina. Current indications are that the NOx-storage efficiency of the NOx-trap composition according to the invention is reduced where the support comprises ceria. Accordingly, in an illustrative embodiment the first support comprises a minority of, or no, ceria.

The oxide support can be stabilised, as desired, with lanthanum, yttrium, cerium, praseodymium, neodymium, promethium, samarium, europium, gadolinium, terbium, dysprosium, holmium, erbium, thulium, yterrbium or lutetium or a mixture of any two or more thereof.

A further illustrative embodiment is a cordierite honeycomb flow-through monolith comprising a NOx-trap composition consisting of rhodium and potassium supported on a gamma alumina.

According to a further aspect, the invention provides a metal or ceramic substrate comprising a NOx-trap composition according to the invention. Generally, the substrate is fitted in a shell closure or can closure for insertion into an exhaust system.

In a further aspect, the invention provides a vehicle comprising a lean-burn engine, an exhaust system comprising a NOₓ-trap composition according to the invention and an engine management means for imposing a lean/rich cycle on the engine for regenerating the NOx-trap composition.

By "lean-burn engine" herein, we mean an engine which is controlled so that during at least part of its nonnal operation it runs on a lean of stoichiometric air-to-fuel ratio, i.e. where λ > 1. Lean-burn engines as defined herein comprise partial lean-burn gasoline engines using a variety of injectors comprising those with air assisted direct injection and high-pressure direct injection, diesel engines or engines which run on alternative fuels such as compressed natural gas or liquid petroleum gas.

In a further aspect, the invention provides the use of a NOx-trap composition according to the invention or of a substrate according to the invention to absorb NOx from exhaust gases of a lean-burn engine during lean-running conditions.

The substrate can have any arrangement commonly used in the art, such as a honeycomb flow-through monolith. However, foam or bead forms of a substrate can be used in the alternative.

Methods of making a NOx-trap composition for use in the exhaust systems are well known and will not be explained in detail here. The supports of the composition can be obtained using solid/solid reaction of the oxides or any other precursor such as carbonates. They may also be prepared by a wet route, i.e. by precipitation with a base of the salts of the support components, then calcining. Alternatively, materials to be supported can be impregnated onto the supports utilising the incipient wetness technique and calcining.

In order that the invention may be more fully understood, the following Examples are provided by way of illustration only and with reference to the accompanying drawings in which:
Figure 1 is a graph showing the NO oxidation activity of a fresh, i.e. not aged, catalyst as a plot of the amount of NO₂ product obtained against temperature for a synthetic gas mixture comprising NO;
Figure 2 is a graph showing the NOx-storage efficiency of various fresh, i.e. not aged, NOx-trap compositions comprising platinum and a NOx-storage component against temperature;
Figure 3 is a graph comparing the NOx-storage efficiency of a platinum-containing NOx-trap composition and a rhodium-containing NOx-trap composition according to the invention both fresh and an aged and having potassium as the NOx-storage component. The support in both cases is a ceria-zirconia-alumina mixed oxide;
Figure 4 is a graph comparing the NOx-storage efficiency of a fresh platinum-containing NOx-trap composition and fresh and aged NOx-trap composition according to the invention both having potassium as the NOx-storage component. The support in both cases is gamma-alumina. The graph also comprises results of an aged NOx-trap composition according to the invention wherein the potassium NOx-storage component illustrated is exchanged for a caesium NOx-storage component for the purposes of comparison;
Figure 5 is a graph of NOx concentration against time to compare the reduction of NOx by rhodium in a NOx-swrage composition according to the invention with a NOx-storage composition containing platinum (and no rhodium);
Figure 6 is a graph comparing the effect on NOx-storage efficiency of the support material in various NOx-trap compositions according to the invention comprising potassium as the NOx-storage component; and
Figure 7 is a graph comparing the NOx-storage efficiency of a NOx-trap composition consisting of rhodium and potassium supported on gamma-alumina according to the invention with a NOx-trap composition consisting of rhodium and caesium supported on gamma-alumina according to the invention for both aged and fresh catalyst.

Key: in the Figures, a single oblique line ("/") between two components in a composition represents that the component before the oblique line was impregnated on the support and the impregnated support was calcined in a separate step from the component appearing after the oblique line, whereas a dash between components ("-") indicates that the components were co-impregnated on the support before calcination. The values given in the legend for each component are in wt_ % of the support. F500 indicates results for a NOx-trap composition fired in air at 500°C for 2 hours; and F800 indicates results for an F500 NOx-trap composition fired further at 800°C for 4 hours, as explained in greater detail in the Examples below.

### COMPARATIVE EXAMPLE 1

This Example is designed to investigate the NO oxidation activity of a fresh, i.e. not aged, catalyst by measuring the ability of the catalyst to convert NO in a synthetic gas mixture to NO₂ as measured by mass spectrometry. The synthetic gas mixture comprised 200 ppm NO, 200 ppm CO, 4.5% CO₂, 12% O₂, 5% H₂O, 600 ppm C₁ hydrocarbon, balance N₂ and was designed to simulate a diesel, i.e. lean, exhaust gas. The catalyst comprised 1wt%M supported on a gamma alumina support, wherein M was platinum or rhodium. The catalyst was prepared by incipient wetness impregnation of a fine powder of the support, and the resulting support was fired in air at 500°C for 2 hours. The impregnated support was then pressed into a tablet and the tablet was then crushed. The crushed, pressed support was then sieved and the 250µm to 355µm fraction was placed in a test rig supplied with a synthetic gas mixture. The temperature was set to increase at a rate of 5°C per minute and the rate of supply of the synthetic gas stream was 40,000hr⁻¹ GHSV.

Whilst the synthetic gas mixture comprises C₁ hydrocarbon, it would be expected that substantially all hydrocarbon would be oxidised above about 250°C. Thus results for oxidation of NO above about 250°C would be expected to be unaffected by the presence of hydrocarbon.

As can be seen in Figure 1, platinum is a more effective NO oxidation catalyst in lean-running conditions above the temperature at which barium nitrate decomposes, i.e. about 350°C, compared with rhodium. At about 475°C, platinum and rhodium have similar NO oxidation activities because NO₂ decomposes to NO at this temperature.

### COMPARATIVE EXAMPLE 2

The NOx-storage efficiency of fresh NOx-trap compositions consisting of platinum and one of barium, caesium and potassium on an alumina support were tested to show how the thermal stability of the nitrate form of the NOx-storage component affects the ability of the NOx-trap component to store NOx at varying temperatures. The catalysts were each prepared in the manner described in Comparative Example 1 above, except as explained below. 0.6 g of each support was used. A potassium on alumina support composition was also tested to show the effect on the NOx-storage efficiency of a NOx-trap component which does not comprise an associated oxidation catalyst component.

A synthetic gas mixture designed to approximate key features of exhaust gas from a lean-burn gasoline engine was used to test the above compositions on a laboratory test (SCAT) unit More particularly, the composition of the synthetic gas mixture was periodically switched from a composition typical of lean-running conditions (lambda 1.4), to one found in rich-running conditions (lambda 0.8). This regime was designed to mimic a so-called rich/lean cycle of management of a vehicle with a lean-burn engine comprising an exhaust system fitted with a NOx-trap. Lean exhaust gases were produced by adding oxygen and simultaneously reducing carbon monoxide concentrations. Rich or stoichiometric gas compositions were produced by the reverse procedure. In the lean phase, the NOx was stored by the composition under test. During the rich phase desorption occurred regenerating the NOx-storage material.

In practice, generally a NOx-trap composition comprises a reduction catalyst, e.g. rhodium, to catalyse the reduction of NOx released by reducing species present in the rich or stoichiometric exhaust gas, such as carbon monoxide and unburnt HCs. However, in this experiment no reduction catalyst is comprised in the test NOx-trap compositions, and so the majority of the released NOx is exhausted *per se.* A mass spectrometer was used to determine and quantify the composition of gas exiting the catalyst

Test conditions applied comprising the composition of synthetic gases entering the catalyst are as follows: (lean, 94 seconds) 12% O₂, 15% CO₂, 4.5 % H₂O, 400ppm propene, 500ppm NO, 0.5% CO, balance N₂ (rich, 3 seconds) 0.1% O₂, 15% CO₂, 4.5 % H₂O, 400ppm propene, 500ppm NO, 12% CO, balance N₂. Gas hourly space velocity (GHSV) = 40,000 hr⁻¹.

The results of the NOx-storage efficiency of the various compositions as determined by the gas composition of gases exiting the catalysts at various temperatures are shown graphically in Figure 2. As can be seen, the NOx-storage efficiency of potassium alone is relatively poor, but that its performance is improved when the composition comprises a platinum oxidation catalyst component It can also be seen that where the NOx-storage component is barium, its NOx storage efficiency tails off significantly above about 350°C. A reason for this is because barium carbonate is favoured over barium nitrate above about 350°C in the synthetic lean-burn exhaust gas conditions of the test. It is for this reason that we can refer to barium and other alkaline earths as relatively low temperature NOx-storage components.

By contrast, the NOx-storage efficiency of fresh compositions comprising an alkali metaL, such as potassium and caesium, with the platinum remains at or near its maximum up to about 550°C, the performance of potassium being slightly better than caesium. This shows that the nitrate of potassium or caesium is more thermally stable than that of barium and for this reason we can refer to potassium and caesium as relatively high temperature NOx-storage components.

### EXAMPLE 1

This Example is designed to show how a NOx-trap composition according to the invention consisting of rhodium and a potassium NOx storage component supported on a ceria-zirconia-alumina mixed oxide support performed when compared with an identical NOx-trap composition except that platinum is used instead of rhodium. Catalyst was prepared as described in Comparative Example 2, and tests were performed on the "fresh" catalyst which had been fired in air at 500°C for 2 hours and on aged catalyst; fresh catalyst by firing in air at 800°C for 4 hours. Test conditions were identical to those in Comparative Example 2 above.

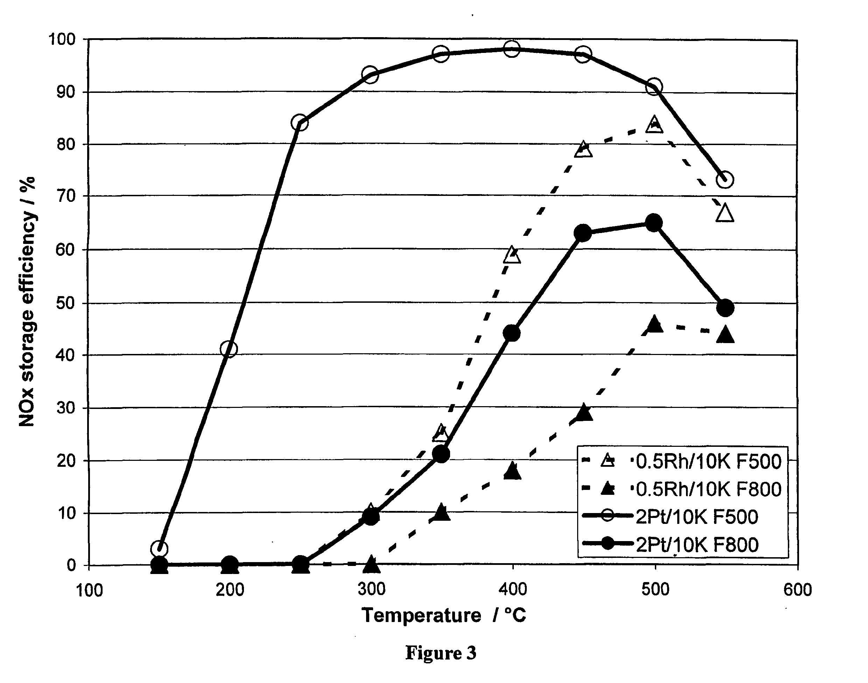

As can be seen from Figure 3, the NOx-storage efficiency of the NOx-trap composition according to the invention is similar compared with the platinum-containing composition. The trend ofNOx-storage efficiency between "fresh" and aged composition is similar for both compositions.

### EXAMPLE 2

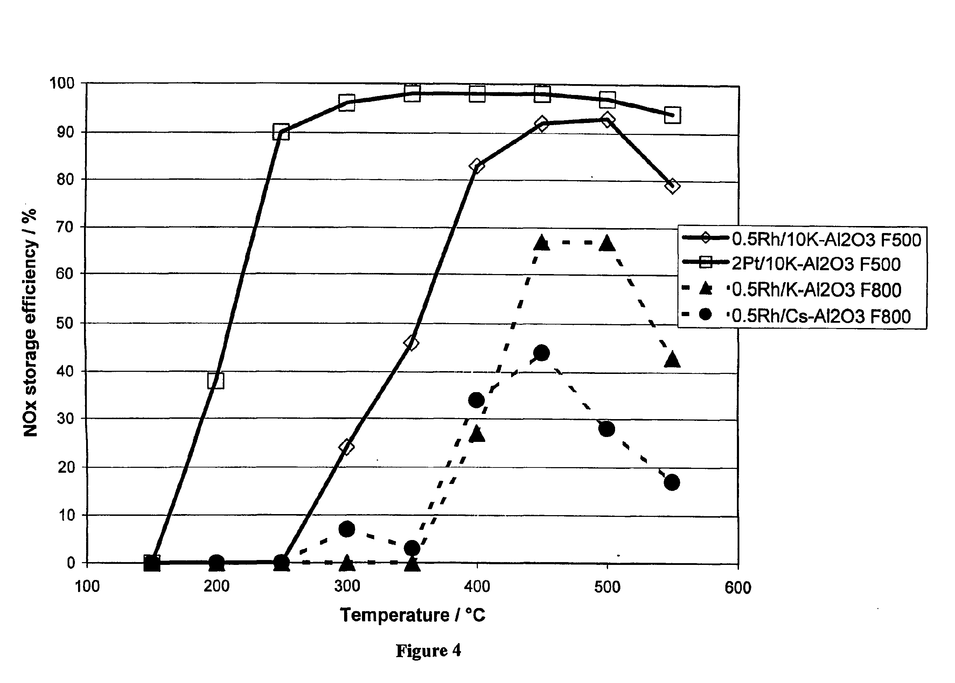

Fresh NOx-trap compositions consisting of platinum or rhodium and potassium supported on gamma alumina were prepared and tested according to the method set out in Comparative Example 2 above. The results are shown in Figure 4. The results for the aged rhodium-containing embodiment are also included Results for an F800 embodiment wherein caesium instead of potassium is used as the NOx-storage component is included for the purposes of comparison.

It can be seen that the rhodium-containing NOx-trap composition performs similarly to the platinum-containing composition at temperatures above 400°C. In view of the trend observed between fresh and aged catalyst in Example 1, it would be expected that an aged platinum-containing NOx-trap composition would perform similarly to the aged rhodium/potassium/gamma-alumina NOx-trap composition. The NOx-storage efficiency of the caesium embodiment is not as good as the potassium embodiment, but, as can be seen in Examples 3 and 4 below, activity can be dependent on the nature of the support.

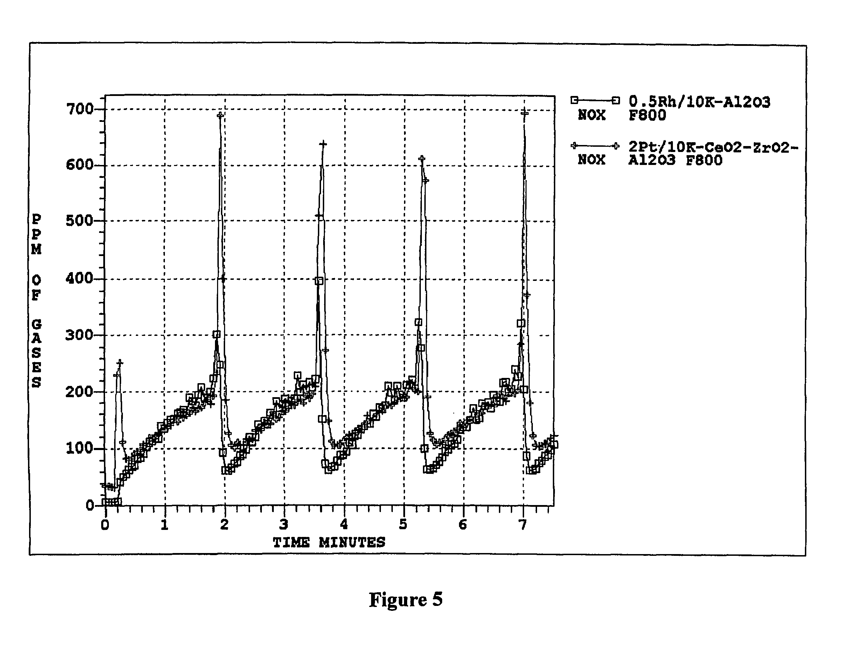

In order to show that the reductive catalytic qualities of rhodium in a NOx-trap composition from the present Example are unaffected by the presence of potassium compared with the platinum-containing NOx-trap composition (cena-zirconia-alumina support from Example 1), Figure 5 plots the NOx concentration of the exhaust gas leaving the sample during rich-lean cycling against time for aged catalyst at 450°C at which the NOx storage efficiency of the rhodium embodiment is 63% and the platinum-containing composition is 65%. It can be seen that NOx concentration leaving the rhodium-containing NOx-trap composition is less than that leaving the platinum-containing composition. This is indicative of the NOx being reduced by *inter alia* CO catalysed by the rhodium during the "rich" pulses for regenerating the NOx-storage component

### EXAMPLE 3

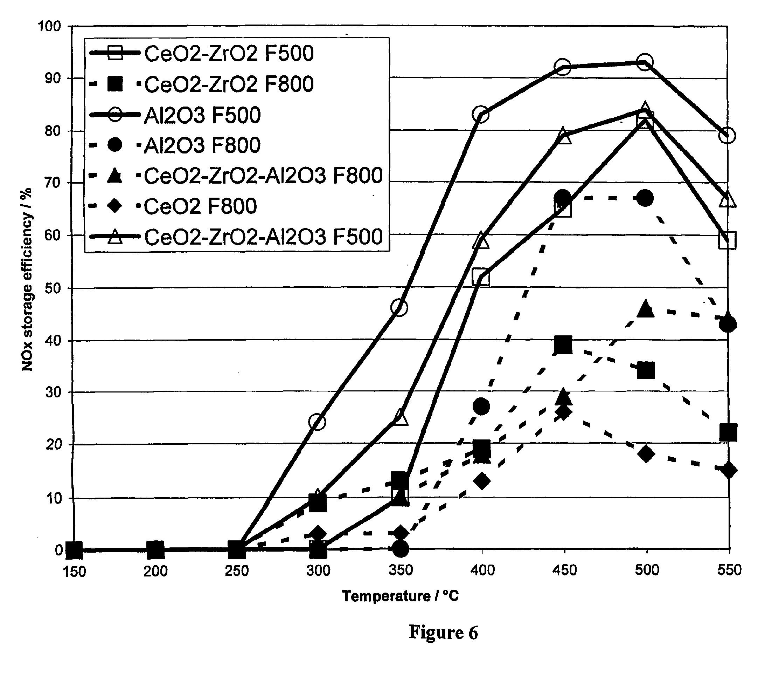

To test what effect, if any, the support had on the NOx-trap composition according to the invention, various NOx-trap compositions (0.5 Rh/10K) were prepared each comprising a different support material. Support materials tested were gamma alumina (Condia), a cena-zircoma-alumina mixed oxide and a ceria-zirconia mixed oxide wherein the majority of the mixed oxide is derived from ceria. In all other respects the methods of this Example were as set out in the Comparative Example above. The results are set out in Figure 6.

It can be seen that the trend between "fresh" (fired in air at 500°C) and aged catalyst (fresh catalyst fired at 800°C for a further 4 hours) first observed in the Comparative Example is repeated. Furthermore, NOx-trap composition comprising the gamma-alumina support performed best of all those tested, then the ceria-zirconia-alumina mixed oxide support and then the ceria-zirconia mixed oxide support. From these results, we surmise that the presence of ceria in the support material may have a limited but negative effect on the NOx-storage efficiency of the NOx-trap composition according to the invention. To test this theory, we prepared a NOx-trap composition wherein the support was a high surface area ceria and the results for an aged sample is shown in Figure 6. As can be seen, the presence of ceria in the support tends to lower the NOx-storage efficiency of the NOx-trap composition of the invention.

### EXAMPLE 4

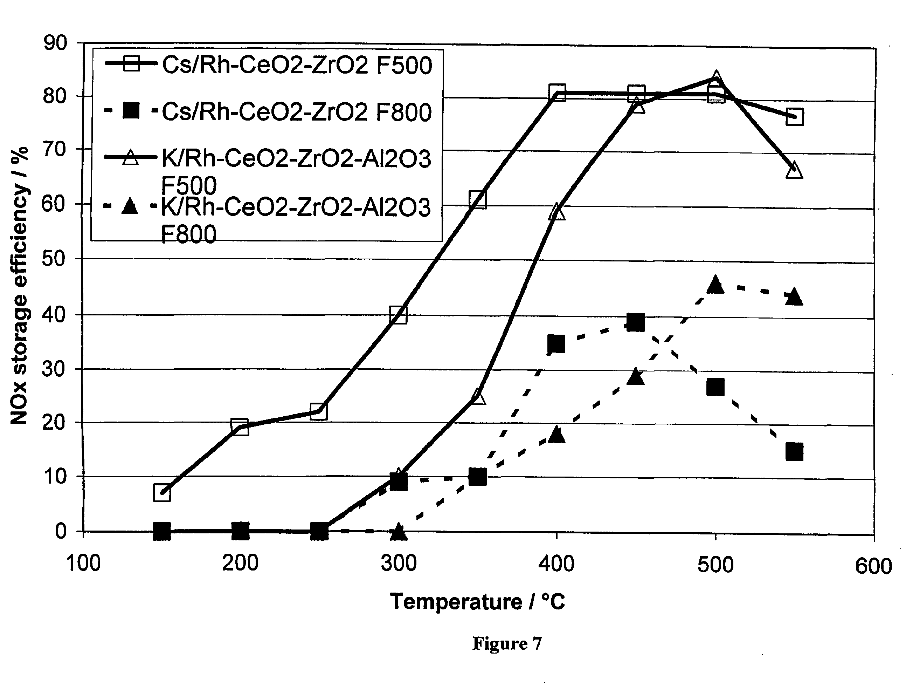

In order to compare the NOx-storage efficiency of NOx-trap compositions comprising caesium or potassium according to the invention, NOx-trap compositions according to the invention (ceria-zirconia-alumina support) comprising one of these NOx-storage compositions were prepared and tested according to the methods set out in the Comparative Example- The results are set out in Figure 7 and show that each composition had similar activity.

## Claims

1. A NOₓ-trap composition consisting essentially of rhodium and at least one alkali metal NOₓ storage component supported on a first support and, optionally, a second support supporting at least one alkali metal or alkaline earth metal NOₓ storage component.

2. A NOx-trap composition according to claim 1, wherein each at least one alkali metal is selected from the group consisting of potassium, caesium and mixtures thereof

3. A NOx-trap composition according to claim 1 or 2, wherein the alkaline-earth metal is selected from the group consisting of barium., calcium, strontiurn, magnesium and mixtures of any two or more thereof.

4. A NOx-trap composition according to claim 1, 2 or 3, wherein each support is an oxide selected from the group consisting of ceria, zirconia, alumina, titania, a mixed oxide of any two or more thereof and mixtures of any two or more of ceria, zirconia, alumina and titania.

5. A NOx-trap composition according to claim 1, 2, 3 or 4, wherein the first support is gamma alumina.

6. A NOx-trap composition according to claim 4 or 5, wherein the oxide support is stabilised with lanthanum, yttrium, cerium praseodymium, neodymium, promethium, samarium, europium, gadolinium, terbium, dysprosium, holmium, erbium, thulium, ytterbium or lutetium or a mixture of any two or more thereof.

7. A NOx-trap composition according to any preceding claim, wherein the first support is free of ceria.

8. A metal or ceramic substrate coated with a NOx-trap composition according to any preceding claim.

9. A vehicle comprising a lean-burn engine and an exhaust system comprising a NOₓ-trap composition according to any of claims 1 to 7 and an engine management means for imposing a lean/rich cycle on the engine for regenerating the NOx-trap composition.

10. A vehicle according to claim 9, wherein the lean-burn, engine is a direct injection gasoline engine or a diesel engine.

11. The use of a NOx-trap composition according to any of claims 1 to 7 to absorb NOx from exhaust gases of a lean-burn engine during lean-running conditions.

12. A cordierite honeycomb flow-through monolith comprising a NOx-trap composition according to claim 1 consisting of rhodium and potassium supported on a gamma alumina support.

## Patentansprüche

1. NOₓ-Speicherzusammensetzung, bestehend im Wesentlichen aus Rhodium und mindestens einer Alkalimetall-NOₓ-Speicherkomponente, getragen von einem ersten Träger und gegebenenfalls einem zweiten Träger, der mindestens eine Alkalimetall- oder Erdalkalimetall-NOₓ-Speicherkomponente trägt.

2. NOₓ-Speicherzusammensetzung nach Anspruch 1, wobei jedes mindestens eine Alkalimetall ausgewählt ist aus der Gruppe, bestehend aus Kalium, Cäsium und Gemischen davon.

3. NOₓ-Speicherzusammensetzung nach Anspruch 1 oder 2, wobei das Erdalkalimetall ausgewählt ist aus der Gruppe, bestehend aus Barium, Calcium, Strontium, Magnesium und Gemischen von beliebigen zwei oder mehreren davon.

4. NOₓ-Speicherzusammensetzung nach Anspruch 1, 2 oder 3, wobei jeder Träger für ein Oxid steht, das ausgewählt ist aus der Gruppe, bestehend aus Ceroxid, Zirconiumoxid, Aluminiumoxid, Titanoxid, einem gemischten Oxid von beliebigen zwei oder mehreren davon und Gemischen von beliebigen zwei oder mehreren von Ceroxid, Zirconiumoxid, Aluminiumoxid und Titanoxid.

5. NOₓ-Speicherzusammensetzung nach Anspruch 1, 2, 3 oder 4, wobei der erste Träger für gamma-Aluminiumoxid steht.

6. NOₓ-Speicherzusammensetzung nach Anspruch 4 oder 5, wobei der Oxidträger stabilisiert ist mit Lanthan, Yttrium, Cer, Praseodym, Neodym, Promethium, Samarium, Europium, Gadolinium, Terbium, Dysprosium, Holmium, Erbium, Thulium, Ytterbium oder Lutetium oder einem Gemisch von beliebigen zwei oder mehreren davon.

7. NOₓ-Speicherzusammensetzung nach einem vorstehenden Anspruch, wobei der erste Träger frei von Ceroxid ist.

8. Metall- oder Keramiksubstrat, beschichtet mit einer NOₓ-Speicherzusammensetzung nach einem vorstehenden Anspruch.

9. Fahrzeug, umfassend einen Magerverbrennungsmotor und ein Abgassystem, umfassend eine NOₓ₋Speicherzusammensetzung nach einem der Ansprüche 1 bis 7 und eine Motormanagementeinrichtung, um dem Motor einen Mager/Fett-Zyklus aufzuerlegen zum Regenerieren der NOₓ-Speicherzusammensetzung.

10. Fahrzeug nach Anspruch 9, wobei der Magerverbrennungsmotor für einen Direkteinspritzungsottomotor oder einen Dieselmotor steht.

11. Verwendung einer NOₓ-Speicherzusammensetzung nach einem der Ansprüche 1 bis 7, um NOₓ aus Abgasen von einem Magerverbrennungsmotor während Magerlaufbedingungen zu absorbieren.

12. Cordierit-Bienenwabendurchflussmonolith, umfassend eine NOₓ-Speicherzusammensetzung nach Anspruch 1, bestehend aus Rhodium und Kalium, getragen von einem gamma-Aluminiumoxidträger.

## Revendications

1. Composition de piège à NOₓ constituée essentiellement de rhodium et au moins un composant de stockage de NOₓ de métal alcalin supporté sur un premier support et, facultativement, un second support supportant au moins un composant de stockage de NOₓ de métal alcalin ou de métal alcalino-terreux.

2. Composition de piège à NOₓ selon la revendication 1, dans laquelle chaque au moins un métal alcalin est choisi parmi le groupe consistant en le potassium, le césium et les mélanges de ceux-ci.

3. Composition de piège à NOₓ selon la revendication 1 ou 2, dans laquelle le métal alcalino-terreux est choisi parmi le groupe consistant en le baryum, le calcium, le strontium, le magnésium et les mélanges de deux ou plus de ceux-ci.

4. Composition de piège à NOₓ selon la revendication 1, 2, ou 3, dans laquelle chaque support est un oxyde choisi parmi le groupe consistant en l'oxyde de cérium, la zircone, l'alumine, l'oxyde de titane, un oxyde mixte d'un ou plusieurs de ceux-ci et les mélanges de deux ou plus parmi l'oxyde de cérium, la zircone, l'alumine et l'oxyde de titane.

5. Composition de piège à NOₓ selon la revendication 1, 2, 3 ou 4, dans laquelle le premier support est de la gamma alumine.

6. Composition de piège à NOₓ selon la revendication 4 ou 5, dans laquelle le support d'oxyde est stabilisé avec du lanthane, de l'yttrium, du cérium, du praséodyme, du néodyme, du prométhium, du samarium, de l'europium, du gadolinium, du terbium, du dysprosium, de l'holmium, de l'erbium, du thulium, de l'ytterbium ou du lutétium ou un mélange de deux ou plus de ceux-ci.

7. Composition de piège à NOₓ selon l'une quelconque des revendications précédentes, dans laquelle le premier support est dépourvu d'oxyde de cérium.

8. Substrat de céramique ou de métal revêtu avec une composition de piège à NOₓ selon l'une quelconque des revendications précédentes.

9. Véhicule comprenant un moteur à charge stratifiée et un système d'échappement comprenant une composition de piège à NOₓ selon l'une quelconque des revendications 1 à 7 et un moyen de gestion de moteur pour imposer un cycle pauvre/riche au moteur pour régénérer la composition de piège à NOₓ.

10. Véhicule selon la revendication 9, dans lequel le moteur à charge stratifiée est un moteur à essence ou un moteur diesel à injection directe.

11. Utilisation d'une composition de piège à NOₓ selon l'une quelconque des revendications 1 à 7 pour absorber les NOₓ des gaz d'échappement d'un moteur à charge stratifiée durant des conditions de fonctionnement pauvre.

12. Monolithe de traversée de nid d'abeilles en cordiérite comprenant une composition de piège à NOₓ selon la revendication 1 consistant en du rhodium et du potassium supportés sur un support en gamma alumine.
